# DEMANDE DE BREVET EUROPEEN

(11) **EP 1 039 311 A1**
(43) Date de publication de la demande: **27.09.2000**
(21) Numéro de dépôt: 00460016.9
(22) Date de dépôt: 24.02.2000
(51) Int. Cl.: G01S 5/14, H04H 1/00

(54) **Dispositif de réception radiofréquence bi-mode et récepteur multimédia correspondant**

(30) Priorité: 23.03.1999 FR 9903769
(71) Demandeur: FRANCE TELECOM, 75015 Paris (FR)
(72) Inventeur: Andre, Eric, 38000 Grenoble (FR); Senn, Patrice, 38000 Grenoble (FR)
(74) Mandataire: Vidon, Patrice

(57) **Abrégé**

L'invention concerne un dispositif de réception radiofréquence bi-mode, du type permettant la réception d'une part de signaux diffusés multiporteuses dans une première bande de fréquence et d'autre part de signaux de radiolocalisation dans une seconde bande de fréquence, comprenant un module de pré-traitement unique (21), comprenant notamment un filtre d'antenne passe-bande (211) dont la bande passante inclut au moins lesdites première et seconde bandes de fréquence, et alimentant d'une part une première chaîne de traitement (22) desdits signaux diffusés multiporteuses, et d'autre part une seconde chaîne de traitement (23) desdits signaux de radiolocalisation.

## Description

Le domaine de l'invention est celui des récepteurs multimédia, et notamment des récepteurs portables ou portatifs. Plus précisément, l'invention concerne les récepteurs capables de recevoir d'une part des signaux diffusés multiporteuses, et d'autre part des signaux de radiolocalisation.

De tels récepteurs multimédia sont notamment développés dans le cadre du projet européen MEDEA A222 « composants pour les systèmes multimédia portables ». Il est prévu que de tels récepteurs comprennent d'une part des moyens de réception de signal DAB (Digital Audio Broadcasting), et d'autre part des signaux GPS (Global Positionning System).

Le système DAB est un système de diffusion de données numériques, dont la vocation première fut de remplacer l'actuelle radio FM. L'un des objectifs était alors d'offrir un son de qualité amélioré, dit « numérique », accompagné d'informations textuelles.

Le système DAB utilise une modulation COFDM. Selon la norme actuellement mise en oeuvre, son spectre occupe 23 canaux, répartis sur une bande de fréquence de 39,2 MHz. La largeur d'un canal DAB est de 1,536 MHz, et l'espacement entre canaux est de 176 kHz. Le niveau de réception varie de -90 dBm à +8 dBm.

Chaque canal DAB est entouré de canaux adjacents dont le niveau peut être 40 dB au-dessus du canal utile, voire 70 dB pour les canaux éloignés (I/C = 40 dB à 70 dB). La dynamique du signal d'entrée, ainsi que la présence de canaux adjacents, imposent la mise en oeuvre d'amplificateurs à gain contrôlé (CAG) et de filtres sélectifs. Un convertisseur analogique-numérique de dynamique suffisante pourra permettre de relâcher les contraintes sur ces deux derniers paramètres, par l'utilisation de filtres et de CAG numériques plus facilement réalisables. Le récepteur doit être suffisamment sélectif pour extraire le signal utile, et avoir une dynamique élevée pour accepter les variations du signal de réception.

Des exemples de récepteurs DAB peuvent notamment être trouvées dans les documents suivants :
- Ward Titus, Rosa Croughwell, Chris Schiller, Larry DeVito, « A Si BJT Dual Band Receiver IC for DAB », Radio Frequency Integrated Circuits Symposium, 1998, pp. 297-300 ;
- Marc Goldfarb, Rosa Croughwell, Chris Schiller, Darell Livezey, George Heiter, « A Si BJT IF DownConverter/AGC IC for DAB », Radio Frequency Integrated Circuits Symposium, 1998, pp. 305-308 ;
- M. Bolle, K. Gieske, F. Hofmann, T. Mlasko, G. Spreitz, « D-FIRE : A DAB Reveiver System on a Chip », Proceeding of ESSCIRC'98, 1998, pp. 360-363.

Un récepteur DAB peut recevoir des données de type audio, vidéo et/ou textuel, qui lui confèrent une fonction de terminal multimédia.

L'adjonction de services supplémentaires tel que le système GPS permet de développer d'autres applications intéressantes.

Ainsi, la réception d'un signal GPS qui permet de déterminer, de façon précise la localisation du récepteur, permet de développer de façon directe des applications d'aide à la navigation, le terminal multimédia indiquant à l'utilisateur sa position sur une carte géographique téléchargée par la voie DAB. Dans le cadre d'une application automobile, la diffusion DAB peut fournir des informations sur les embouteillages et les accidents. La localisation à l'aide du GPS permet de déterminer un nouvel itinéraire.

On rappelle que le signal GPS utilise une modulation à étalement de spectre.

Deux types de signaux GPS sont émis sur deux canaux de fréquences différentes : L1 = 1 575,42 MHz et L2 = 1 227,6 MHz. La voie L2 diffuse un signal utilisé à des fins militaires (code P) et occupe une bande de 20 MHz. La voie L1 émet un signal pour des applications civiles (code C/A), qui occupe une bande de 2 MHz.

Les récepteurs multimédia utilisent donc uniquement cette voie L1. Le niveau de réception du signal GPS pour cette dernière est de -130 dBm environ, soit 19dB en dessous du bruit thermique (environ -111 dBm sur une bande de 2 MHz).

Après corrélation du signal GPS avec la séquence d'étalement (désétalement), ce dernier occupe une bande de 50 Hz, avec un gain de 43 dB. L'opération de corrélation se faisant dans le domaine numérique, la conversion analogique-numérique n'est pas un point très sensible. Généralement, un simple CAN 1 bit est utilisé afin de s'affranchir d'un amplificateur à gain contrôlé (CAG).

Le problème prépondérant est le niveau de bruit rajouté dans la bande après quantification du signal. Dans le cas où un simple quantificateur 1 bit est utilisé, la dynamique de son signal d'entrée doit être suffisamment faible pour que le bruit de quantification ne soit pas trop élevé. Ce dernier aspect suppose un filtrage approprié des perturbateurs et/ou un suréchantillonnage du signal de niveau très faible et avoir un gain élevé (environ 100dB), pour que le niveau du signal GPS puisse être traité par le CAN.

Des exemples de récepteurs GPS peuvent notamment être trouvées dans les documents suivants :
- Anna M. Murphy, Shinichi Tsutsumi, Peter Gaussen, « A Low-Power, Low-Cost Bipolar GPS Receiver Chip », IEEE Journal of Solid-State Circuits, vol. 32, n°4, April 1997, pp. 587-591 ;
- Arvin R. Shahani, Derek K ; Shaeffer, Thomas H. Lee, « A 12-mW Wide Dynamic Range CMOS Front-End for a Portable GPS Receiver », IEEE Journal of Solid State Circuits, vol.32, n°12, December 1997, pp. 2061-2070 ;
- Francesco Piazza, Qiuting, Huang, A 1.57-GHz RF Front-End for Triple Conversion GPS Receiver », IEEE Journal of Solid-State Circuits, vol. 33, n°2, February 1998, pp. 202-209 ;
- D. Shaeffer, A. Shahani, S. Mohan, H. Samavati, H. Rategh, M. Hershenson, M. Xu, C. Yue, D. Eddleman, T. Lee, « A 115 mW CMOS GPS Receiver », Proceedings of ISSCC'98, session 8, February 1998, pp. 122-123.

Actuellement, dans les récepteurs multimédia connus, chacun des services proposés (DAB et GPS) possède son propre système de réception radiofréquence. Deux chaînes de réception radiofréquence sont donc simplement placées côte à côte, dans un même boîtier, éventuellement en partageant une alimentation commune. Ceci implique, bien entendu, une complexité et une consommation accrues.

L'invention a notamment pour objectif de pallier cet inconvénient de l'art antérieur.

Plus précisément, un objectif de l'invention est de fournir un dispositif de réception bi-mode, permettant la réception d'une part de signaux diffusés multiporteuse (par exemple DAB) et d'autre part de signaux de radiolocalisation (par exemple GPS), dans des conditions optimisées, en particulier en ce qui concerne la consommation, l'encombrement et la complexité des moyens mis en oeuvre.

Ainsi, en particulier, un objectif de l'invention est de fournir un tel dispositif, qui présente une consommation suffisamment faible pour être mise en oeuvre sous la forme d'un récepteur multimédia portable.

Un autre objectif de l'invention est, bien sûr, de fournir un tel dispositif de réception qui soit d'un coût de revient réduit, par rapport aux récepteurs connus, du fait d'une complexité technique moindre.

Encore un autre objectif de l'invention est de fournir un tel dispositif de réception présentant de bonnes qualités de réception, malgré la cohabitation de deux systèmes radiofréquences.

Ces objectifs, ainsi que d'autres qui apparaîtront par la suite, sont atteints à l'aide d'un dispositif de réception radiofréquence bi-mode, du type permettant la réception d'une part de signaux diffusés multiporteuses dans une première bande de fréquence et d'autre part de signaux de radiolocalisation dans une seconde bande de fréquence.

Selon l'invention, ce dispositif comprend un module de pré-traitement unique, comprenant notamment un filtre d'antenne passe-bande dont la bande passante inclut au moins lesdites première et seconde bandes de fréquence, et alimentant d'une part une première chaîne de traitement desdits signaux diffusés multiporteuses, et d'autre part une seconde chaîne de traitement desdits signaux de radiolocalisation.

L'invention repose donc sur un partage de certaines ressources (pré-traitement), qui conduit bien évidemment à une réduction du coût, de l'encombrement, de la complexité et de la consommation électrique. Cela permet donc d'envisager une intégration élevée du récepteur sur silicium.

L'invention propose donc une architecture radiofréquence originale, pouvant inclure la réception des signaux DAB et GPS, par exemple autour de 1,5 GHz, avantageusement jusqu'à la génération des voies numériques I et Q.

Ainsi, ledit module de pré-traitement unique comprend également, avantageusement, au moins un des éléments appartenant au groupe comprenant :
- un premier amplificateur, de type faible bruit ;
- un premier étage de transposition à une première fréquence intermédiaire, par multiplication par une première fréquence de transposition ;
- un second amplificateur.

En d'autres termes, l'invention permet une économie importante, en offrant un partage des ressources (notamment le premier étage de transposition).

Toujours dans l'objectif de réduire la complexité,, l'invention propose une mise en oeuvre optimisée des différentes fréquences utilisées.

Ainsi, on met en oeuvre préférentiellement une même fréquence de conversion analogique-numérique, pour piloter les premiers moyens de numérisation de la première chaîne de traitement et les seconds moyens de numérisation de la seconde chaîne de réception.

Lesdits premiers moyens de numérisation comprennent par exemple un modulateur delta-sigma passe-bande. Les seconds moyens de numérisation peuvent quant à eux comprendre un quantificateur « 1 bit ».

De façon préférentielle, le dispositif de réception de l'invention comprend en outre un synthétiseur de fréquences alimentant lesdites première et seconde chaînes de traitement, et permettant de générer au moins deux des fréquences appartenant au groupe comprenant :
- ladite première fréquence de transposition ;
- ladite fréquence de conversion analogique-numérique ;
- une seconde fréquence de transposition (1^{ère} chaîne), utilisée par un second étage de transposition à une seconde fréquence intermédiaire compris dans ladite première chaîne de traitement ;
- une seconde fréquence de transposition (2^{ième} chaîne), utilisée par un second étage de transposition à une seconde fréquence intermédiaire compris dans ladite seconde chaîne de traitement

Comme indiqué en préambule, et sans que cela soit limitatif, ladite première chaîne de traitement permet avantageusement la réception de signaux DAB, et ladite seconde chaîne de traitement la réception de signaux GPS.

Ladite première bande de fréquence peut par exemple être comprise entre environ 1 452,192 MHz et 1 491,392 MHz, et ladite seconde bande de fréquence entre environ 1 574,42 MHz et 1 576,42 MHz.

Le dispositif de réception de l'invention trouve des applications dans de nombreux domaines. Il peut par exemple être incorporé dans un ensemble « autoradio/radionavigation » pour véhicule automobile. Du fait de sa faible consommation, il peut également, avantageusement, être utilisé dans des récepteurs multimédia portables. Une des applications avantageuses pour de tels dispositifs peut être la coopération entre la diffusion de cartes géographiques par le système DAB et une localisation précise sur ces cartes par le système GPS.

D'autres caractéristiques et avantages de l'invention apparaîtront plus clairement à la lecture de la description suivante d'un mode de réalisation particulier de l'invention donnée à titre de simples exemples illustratifs et non limitatifs, et des figures annexées, parmi lesquelles :
- la figure 1 est une représentation fréquentielle des voies DAB et GPS, exploitée par un récepteur bi-mode selon l'invention ;
- la figure 2 est un schéma synoptique d'un mode de réalisation d'un récepteur selon l'invention, prévu pour recevoir et traiter les signaux de la figure 1 ;
- la figure 3 présente un schéma synoptique illustrant une technique avantageuse de synthèse des fréquences pour le récepteur de la figure 2.

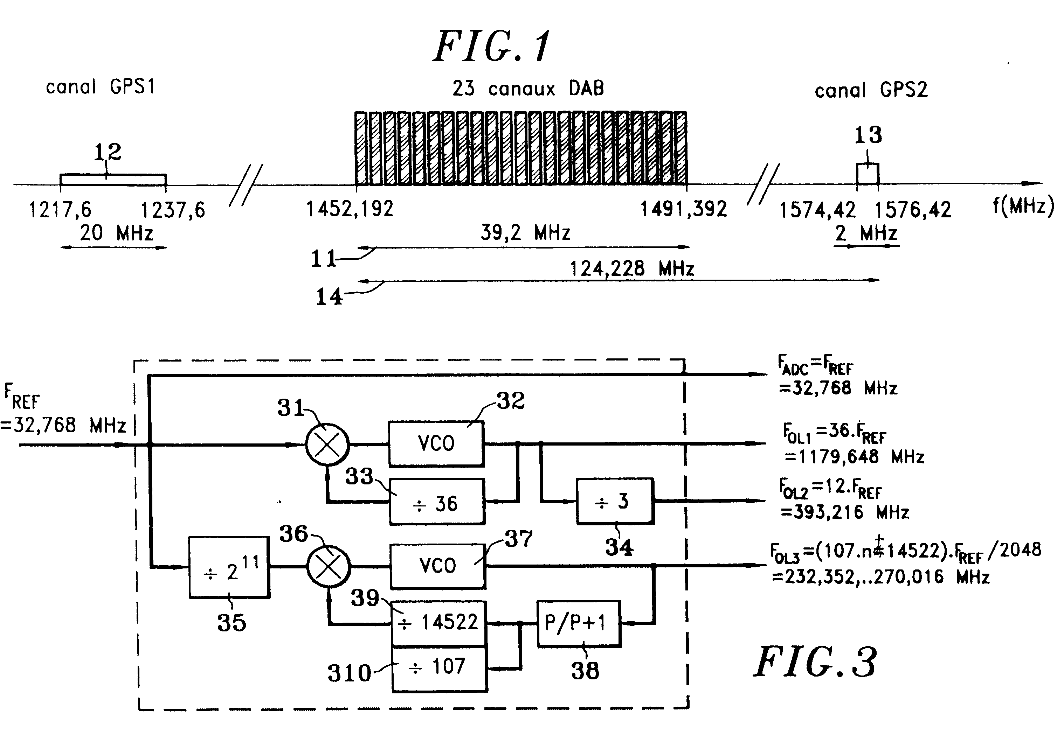

Comme indiqué précédemment, l'architecture radiofréquence proposée selon l'invention tient compte de la proximité des fréquences de réception des signaux DAB et GPS pour optimiser le récepteur. La figure 1 illustre la répartition fréquentielle de ces signaux.

Les signaux DAB (bande L) sont organisés en 23 canaux et répartis sur une bande 11 de 39,2 MHz, compris entre 1452,192 MHz et 1491,392 MHz.

Le système GPS repose quant à lui sur deux canaux :
- un canal GPS1 12, couvrant une bande 20 MHz, entre 1 217,6 MHz et 1 237,6 MHz, correspondant au code P ;
- un canal GPS2 13, présentant une bande de fréquences de 2 MHz entre 1 574,42 MHz et 1 576,42 MHz. Il s'agit de la voie L1, correspondant au code C/A.

Le récepteur de l'invention ne traite, pour l'aspect GPS, que la voie L1 13. En conséquence, le récepteur de l'invention doit donc couvrir, au minimum, la bande de fréquence 14, présentant une largeur de bande de 124,228 MHz, s'étendant de 1 452,192 MHz à 1 576,42 MHz de façon à englober les 23 canaux DAB et le canal GPS2 (L1).

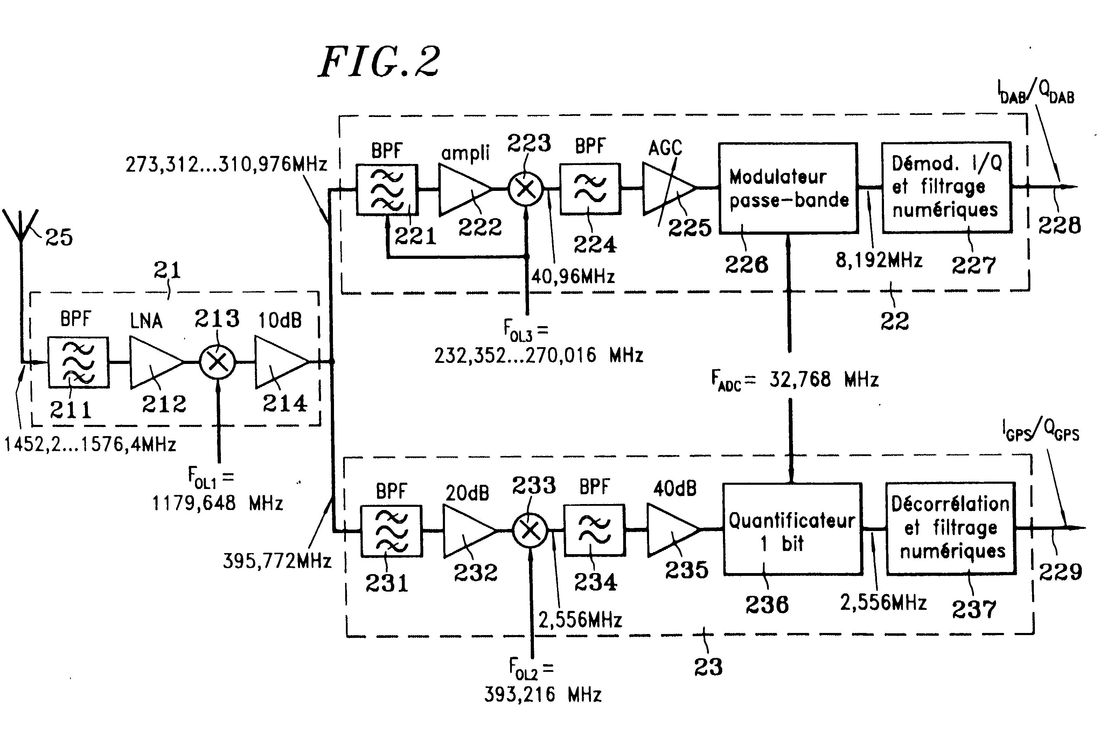

Contrairement aux systèmes connus, l'architecture bi-mode DAB/GPS de l'invention permet de réduire la complexité et la consommation du récepteur radiofréquence, en partageant des ressources matérielles, comme cela apparaît clairement sur la figure 2.

Le récepteur peut être décomposé en trois grands modules :
- un module 21 de pré-traitement ou « tête » du récepteur radiofréquence, qui est commun aux voies DAB et GPS ;
- un module 22 de traitement spécifique DAB ;
- un module 23 de traitement spécifique GPS.

On notera que ces deux modules de traitement 22 et 23, bien qu'indépendants, exploitent préférentiellement les mêmes fréquences, ou des fréquences issues d'un même synthétiseur de fréquences, comme cela apparaît plus clairement par la suite,

La tête 21 du récepteur radiofréquence est donc commune aux voies DAB et GPS. Elle comprend notamment;
- un filtre d'antenne 211 ;
- un amplificateur faible bruit (LNA), dont le faible facteur de qualité (large bande) simplifie sa réalisation, par rapport aux systèmes connus qui supposent des bandes plus faibles ;
- un premier étage 213 de transposition en fréquence intermédiaire, piloté par une fréquence F_{OL1} = 1 179,648 MHz;
- un étage de gain 214.

Les deux voies sont traitées indépendamment, afin de permettre une réception simultanée des signaux DAB et GPS. En d'autres termes, le signal 215 délivré par l'étage de gain 214 alimente simultanément les modules de traitement 22 et 23.

Pour la voie DAB, le module de traitement 22 comprend des moyens de transposition à une seconde fréquence intermédiaire, comprenant un filtre 221,un amplificateur 222 et un mélangeur 223. La fréquence F_{OL3} pilotant le filtre 221 et le mélangeur 222 est comprise entre 232, 352 et 270,016 MHz, selon le canal DAB sélectionné. Le signal obtenu en sortie est centré sur 40,96 MHz. Il alimente un filtre 224 puis un amplificateur à gain contrôlé (CAG) 225. Un modulateur ΔΣ passe-bande 226 sous-échantillonne le signal, avant de le numériser puis générer les voies I et Q numérique. Des moyens 227 de démodulation I/Q et de filtrage numériques délivrent les données 228 sur les voies I et Q.

Le module 23 de traitement GPS comprend quant à lui un filtre 231, centré sur 395,772 MHz, suivi d'un amplificateur 20 dB 232 et d'un second étage de transposition en fréquence intermédiaire 233, piloté par la fréquence F_{OL2}=393,216 MHz. Un filtre LPF 234 puis un amplificateur 40 dB 235 alimente un quantificateur 1 bit 236, qui permet de s'affranchir d'un amplificateur à gain contrôlé. Un module de décorrélation et de filtrage numériques 237 délivre sur les voies I et Q le signal GPS 229.

La structure de ce récepteur bi-mode présente par ailleurs l'avantage de pouvoir partager un même synthétiseur de fréquences, illustré en figure 3. Selon cette technique, le nombre de fréquences devant être généré est réduit au deux tiers.

A partir d'une fréquence de référence F_{REF} = 32,768 MHz, on obtient en effet les fréquences suivantes :
- F_{ADC} = F_{REF} = 32,768 MHz, qui alimente d'une part le modulateur ΔΣ 226 du module de traitement DAB, et d'autre part le quantificateur 1 bit 236 du module de traitement GPS ;
- la fréquence F_{OL1} = 36.F_{REF} = 1 179,648 MHz , pilotant le premier étage de transposition 213 ;
- la fréquence F_{OL2} = 12F_{REF} = 393,216 MHz, pilotant le second étage de transposition 233 du module de traitement GPS ;
- la fréquence F_{OL3} = (107.n + 14 522).F_{REF}/2 048 = 232,352...270,016 MHz, pilotant le second étage de transposition 223 du module de traitement DAB (n valant de 0 à 22, selon le canal DAB sélectionné).

Pour obtenir ces différentes fréquences, le module de synthèse des fréquences comprend un multiplieur de transposition 31 alimentant un oscillateur contrôlé en tension (VCO) 32, et piloté par un diviseur de fréquence par 36 (33). Le signal issu de l'oscillateur 32 fournit la fréquence F_{OL1} et alimente le diviseur par 36 (33). La fréquence F_{OL1} est également divisée par 3 (diviseur 34) pour fournir la fréquence F_{OL2}. Par ailleurs, la fréquence F_{REF} alimente un module 35 de division par 2 048 (= 2¹¹), alimentant un multiplieur de transposition 36 qui fournit, via un oscillateur contrôlé en tension (VCO) (37), la fréquence F_{OL3}. Cette fréquence est rebouclée sur un module (38) P/P+1 (correspondant à la sélection du canal DAB qui alimente simultanément un diviseur par 14 522 (39) et un diviseur par 107 (310) qui pilotent le multiplieur de transposition 36.

Ainsi, selon l'invention, on dispose d'une architecture radiofréquence optimisée pour la réception des signaux DAB et GPS. Elle permet notamment d'envisager la réalisation de récepteurs multimédia portables, et trouve par exemple des applications dans l'aide à la navigation individuelle, un particulier pouvant connaître sa position (GPS) sur une carte téléchargée (DAB).

La réduction du coût et de la consommation d'un tel terminal permet d'envisager une intégration élevée du récepteur sur silicium. Du fait notamment de la proximité des fréquences de réception des voies GPS et DAB (en bande L) la réception bi-mode est optimisée, grâce à un partage des ressources matérielles et fréquentielles.

## Revendications

1. Dispositif de réception radiofréquence bi-mode, du type permettant la réception d'une part de signaux diffusés multiporteuses dans une première bande de fréquence (11) et d'autre part de signaux de radiolocalisation dans une seconde bande de fréquence (12), (13),
caractérisé en ce qu'il comprend un module de pré-traitement unique (21), comprenant notamment un filtre d'antenne passe-bande (211) dont la bande passante inclut au moins lesdites première et seconde bandes de fréquence, et alimentant d'une part une première chaîne de traitement (22) desdits signaux diffusés multiporteuses, et d'autre part une seconde chaîne de traitement (23) desdits signaux de radiolocalisation.

2. Dispositif selon la revendication 1, caractérisé en ce que ledit module de pré-traitement unique (21) comprend également au moins un des éléments appartenant au groupe comprenant :
- un premier amplificateur (212) , de type faible bruit ;
- un premier étage de transposition (213) à une première fréquence intermédiaire, par multiplication par une première fréquence de transposition ;
- un second amplificateur (214).

3. Dispositif selon l'une quelconque des revendications 1 et 2, caractérisé en ce que ladite première chaîne de traitement (22) comprend des premiers moyens de numérisation (226) et ladite seconde chaîne de réception comprend des seconds moyens de numérisation (236), lesdits premiers et seconds moyens de numérisation étant pilotés par une même fréquence de conversion analogique-numérique.

4. Dispositif selon la revendication 3, caractérisé en ce que lesdits premiers moyens de numérisation (226) comprennent un modulateur delta-sigma passe-bande.

5. Dispositif selon l'une quelconque des revendications 3 et 4, caractérisé en ce que lesdits seconds moyens de numérisation (236) comprennent un quantificateur "1 bit".

6. Dispositif selon l'une quelconque des revendications 1 à 5, caractérisé en ce qu'il comprend en outre un synthétiseur de fréquences (31 à 31a) alimentant lesdites première et seconde chaînes de traitement, et permettant de générer au moins deux des fréquences appartenant au groupe comprenant :
- ladite première fréquence de transposition ;
- ladite fréquence de conversion numérique ;
- une seconde fréquence de transposition, utilisée par un second étage de transposition à une seconde fréquence intermédiaire compris dans ladite première chaîne de traitement ;
- une seconde fréquence de transposition, utilisée par un second étage de transposition à une seconde fréquence intermédiaire compris dans ladite seconde chaîne de traitement.

7. Dispositif selon l'une quelconque des revendications 1 à 6, caractérisé en ce que ladite première chaîne de traitement (22) permet la réception de signaux DAB,
et en ce que ladite seconde chaîne de traitement (23) permet la réception de signaux GPS.

8. Dispositif selon l'une quelconque des revendications 1 à 7, caractérisé en ce que ladite première bande de fréquences est comprise entre environ 1452,192 MHz et 1491,392 MHz,
et en ce que ladite seconde bande de fréquences est comprise entre environ 1574,42 MHz et 1576,42 MHz.

9. Récepteur multimédia portable, caractérisé en ce qu'il comprend un dispositif de réception radiofréquence bi-mode selon l'une quelconque des revendications 1 à 8.
